# EUROPÄISCHE PATENTSCHRIFT

(11) **EP 1 769 239 B1**
(45) Veröffentlichungstag und Bekanntmachung des Hinweises auf die Patenterteilung: **30.11.2011**
(21) Anmeldenummer: 05761472.9
(22) Anmeldetag: 10.06.2005
(51) Int. Cl.: G01N 27/87, G01N 27/83

(54) **VERFAHREN ZUR ZERSTÖRUNGSFREIEN PRÜFUNG VON ROHREN**
METHOD FOR TESTING PIPES IN A NON-DESTRUCTIVE MANNER
PROCEDE D'ESSAI NON DESTRUCTIF DE TUYAUX

(30) Priorität: 16.07.2004 DE 102004035174
(43) Veröffentlichungstag der Anmeldung: 04.04.2007
(73) Patentinhaber: V & M Deutschland GmbH, 40472 Düsseldorf (DE)
(72) Erfinder: KAACK, Michael, 44801 Bochum (DE); NITSCHE, Stefan, 45473 Mülheim (DE); ORTH, Thomas, 45481 Mülheim (DE)
(74) Vertreter: Meissner, Peter E.
(86) Internationale Anmeldenummer: PCT/DE2005/001074
(87) Internationale Veröffentlichungsnummer: WO 2006/007807

(56) Entgegenhaltungen:
- WO-A-02/095383
- DE-A1- 2 925 924
- US-A1- 2003 117 134
- US-B1- 6 366 085
- PATENT ABSTRACTS OF JAPAN Bd. 012, Nr. 034 (P-662), 2. Februar 1988 (1988-02-02) & JP 62 185162 A (NATL RES INST FOR METALS), 13. August 1987 (1987-08-13) in der Anmeldung erwähnt

## Beschreibung

Die Erfindung betrifft ein Verfahren zur zerstörungsfreien Prüfung von Rohren aus ferromagnetischem Stahl mittels Streufluss gemäß dem Oberbegriff des Patentanspruches 1.

Die bekannte Streuflussprüfung wird bei Rohren aus ferromagnetischem Stahl angewendet, um insbesondere längsorientierte, oberflächennahe Ungänzen, wie z. B. Risse, zu detektieren, die mit anderen Prüfverfahren nicht oder nur mit großer Ungenauigkeit kosten- und zeitintensiv erfasst werden können.

Mit diesem Verfahren werden z. B. Risse erfasst, die ausgehend von der Oberfläche des Rohres sich mindestens ca. 0,3 mm erstrecken (Nondestructive Evaluation, A Tool in Design, Manufacturing, and Service, CRC Press 1997).

Bei dem nach dem Stand der Technik bekannten Messverfahren zum Nachweis oberflächennaher Fehler an der Innen- oder Außenseite von Rohren wird die Gleichfeldmagnetisierung eingesetzt.

Im Gegensatz zur beispielsweise bei Stangenmaterial eingesetzten Wechselfeldmagnetisierung, die nur eine Detektierung von Außenfehlern zulässt, können mit der Gleichfeldmagnetisierung auch Fehler an der Innenoberfläche von Rohren detektiert werden.

Bei der Streuflussprüfung mit Gleichfeldmagnetisierung wird der Effekt genutzt, dass sich die Induktionsflussdichte im Bereich eines Fehlers erhöht, wobei die magnetischen Feldlinien durch Außen- bzw. Innenfehler in ihrer ansonsten gradlinigen Ausbreitung gestört werden, so dass ein so genannter Streufluss entsteht. Dieser an der Rohroberfläche austretende Streufluss wird zum Nachweis der Fehler genutzt.

Die Messung der magnetischen Streuflussdichte erfolgt üblicherweise mit Hall-Sonden oder Induktionsspulen, die in einem Prüfkopf angeordnet sind. Bei der Verwendung von (fest um dass Rohr angeordneten) Induktionsspulen ist es zur Prüfung der gesamten Rohroberfläche in Rohrlängsachse notwendig, dass das Rohr rotiert und sich in Rohrlängsrichtung fortbewegt. Demgegenüber sind Hall-Sonden auch bei sich nur in Rohrlängsrichtung bewegendem Rohr anwendbar. Die verarbeiteten Signale können dann zur Sortierung und Markierung der Rohre dienen und die Prüfergebnisse protokolliert werden.

Mit diesem bekannten Oberflächenprüfverfahren können zwar etwaige Ungänzen an der Rohroberfläche sicher erkannt werden, eine Zuordnung der Fehlersignale zur Außen- oder Innenoberfläche des Rohres, also eine Fehlertrennung, ist mit diesem Verfahren nicht oder nur in sehr aufwändiger Weise möglich.

Nach betrieblichen Untersuchungen reicht auch eine Frequenzanalyse der mit Hall-Sonden oder Induktionsspulen gemessenen Signale für eine genaue Fehlerzuordnung nicht aus, da die gemessenen Frequenzen eng beieinander liegen und zusätzlich von einer Art "Grundrauschen" überlagert werden. Dieses durchaus kohärente Untergrundsignal kann verschiedene Ursachen haben, wie z. B. walzbedingte Wanddickenschwankungen.

Aus diesem Grund wird nach WO 02/095383 A2 über eine lokale Differenzbildung der Messsignale von mindestens zwei in der gleichen Ebene liegenden Einzelsonden versucht, dieses Untergrundsignal zu minimieren. Dies ist aber mit dem Nachteil behaftet, dass je nach Fehlergröße oder -länge eine Unempfindlichkeit von Fehlern genau in der Richtung der lokalen Differenzbildung besteht. Gerade bei natürlichen Fehlern, die nicht scharf begrenzt, sondern flach ein- oder auslaufen können, stellt dies ein Problem dar.

Die von Innenfehlern hervorgerufenen Amplituden der Streuflüsse an der Rohraußenoberfläche sind bei vergleichbaren Fehlerabmessungen deutlich geringer, als diejenigen die von Fehlern an der Rohraußenoberfläche erzeugt werden. Zur sicheren Fehlererkennung wird deshalb bei dem bekannten Verfahren, die Empfindlichkeit der Hall-Sonden oder Induktionsspulen auf mögliche Innenfehler eingestellt. Dies hat aber den nachteiligen Effekt, dass noch eventuell tolerierbare Außenfehler zu empfindlich erfasst und angezeigt werden, was zu unnötigem Ausschuss oder Nacharbeit an den Rohren führt.

Aus der JP 62185162 A ist es bekannt, die Winkellage oder Form eines sich ausgehend von einer Werkstückoberfläche in das Innere erstreckenden Fehlers mittels Streuflussprüfung zu detektieren. Hierbei werden allgemein Amplitudensignale von zwei senkrecht voneinander beabstandeten Sensoren erfasst, ausgewertet, zueinander in Beziehung gesetzt und aus dem Verhältnis ein Maß für die Form oder Winkellage des Fehlers abgeleitet. Es gibt keinen Hinweis darauf wie eine Fehlertrennung von Außen- und Innenfehler bei der Streuflussprüfung eines Rohres erreicht werden kann.

Eine Fehlertrennung nach Rohraußen- oder Innenoberflächenfehlern ist daher aus vielen Gründen wünschenswert. Fehler, die an der Außen- oder Innenoberfläche des Rohres liegen, können zudem unterschiedliche Ursachen haben, die beispielsweise aus den vorangegangenen Fertigungsschritten bei der Herstellung des Rohres (fehlerhaftes Innenwerkzeug oder Walzen) oder aus Fehlern im Vormaterial herrühren. Eine frühzeitige Fehlereingrenzung und Fehlererkennung und daraus resultierende Korrekturmaßnahmen wird erschwert, und führt ebenfalls zu unnötig hohen Ausfall- und Nacharbeitungsquoten. Bei Fehlern an der Rohrinnenoberfläche kann je nach Rohrdurchmesser gar nicht mehr nachgearbeitet werden, so dass diese Rohre auf jeden Fall als Ausschuss aussortiert werden müssen.

Aus der DE 29 25 924 A1 ist schließlich eine Sondenanordnung zum Abtasten der Oberfläche eines magnetisierten ferromagnetischen Prüfteils auf von Fehlern ausgehenden magnetischen Streufluss mit mindestens einer Induktionssonde bekannt. Dabei war erkannt worden, dass innenliegende Fehler mit geringerer Empfindlichkeit wiedergegeben werden als gleich große außenliegende Fehler. Um dies zu vermeiden und eine weitgehend gleiche Empfindlichkeit gegenüber Fehlern zu erreichen, und zwar durch eine entsprechenden Aufbau der Induktionsspule die zu gleich hohen Streuflusssignalen führt.

Aufgabe der Erfindung ist es, ein sicheres und kostengünstiges Verfahren zur zerstörungsfreien Prüfung von Rohren aus ferromagnetischem Stahl mittels Streufluss anzugeben, mit dem eine eindeutige Fehlerzuordnung zur Rohraußen- oder Innenoberfläche möglich ist.

Erfindungsgemäß wird diese Aufgabe dadurch gelöst, dass die in der vertikalen Richtung sich verändernde Amplitude der Horizontalfeldkomponente des magnetischen Streuflusses durch magnetfeldempfindliche Abtastsonden zum Einen in einem oberflächennahen Abstand von der Rohraußenoberfläche und zum Anderen in einem weiter entfernt davon liegenden Abstand erfasst und die erfassten Signale in Beziehung gesetzt werden.

Vorteilhaft beträgt der oberflächennahe Abstand der Abtastsonden von der Rohraußenoberfläche ca. 0,5 bis 1,5 mm, um Beschädigungen der Sonde aufgrund von Durchmesserschwankungen des Rohres zu vermeiden. Ein Abstand von ca. 1 mm hat sich dabei als besonders günstig erwiesen. Die zweite Sonde befindet sich erfindungsgemäß in einem Abstand von ca. 2 - 5 mm von der ersten Sonde, wobei ein Abstand von ca. 3 mm als besonders vorteilhaft angesehen wird.

Das erfindungsgemäße Verfahren beruht auf der Erkenntnis, dass die von Fehlern an der Rohraußenoberfläche hervorgerufene Streuflussamplitude der Horizontalfeldkomponente, mit zunehmendem vertikalem Abstand von der Rohraußenoberfläche sehr schnell und die Streuflussamplitude an der Rohraußenoberfläche von Fehlern auf der Rohrinnenoberfläche deutlich schwächer abfällt. Bei Untersuchungen hat sich herausgestellt, dass der Abfall der Amplitude eines Außenfehlers in etwa immer doppelt so groß ist, wie der Amplitudenabfall eines an der Rohrinnenoberfläche liegenden Fehlers.

Die gemessenen Signale werden dabei überlagert durch Untergrundsignale ("Grundrauschen"), welche von lokalen Durchmesserschwankungen, beispielsweise durch Wanddickenschwankungen oder Zunderanhaftungen auf der Rohraußenoberfläche hervorgerufen werden.

Erfindungsgemäß werden deshalb die in den unterschiedlichen Abständen zur Rohraußenoberfläche gemessenen Amplitudensignale in Beziehung gesetzt, wobei sich neben der weitgehenden Rauschunterdrückung nun in vorteilhafter Weise ebenfalls eine Fehlerzuordnung zur Rohraußen- oder Innenoberfläche vornehmen lässt.

Hierbei wird zunächst die Amplitude des im weiter entfernt liegenden Abstand erfassten (schwächeren) Signales vorteilhaft um einen Faktor >1, vorzugsweise 1-2 vergrößert und danach mit der Amplitude des im oberflächennahen Bereich erfassten Signales über eine Differenzbildung in Beziehung gesetzt.

Der Vorteil dieser Verfahrensweise ist, dass das Grundrauschen aus dem Messsignal nunmehr herausgefiltert wird, so dass im Wesentlichen nur noch das reine Fehlersignal zu Anzeige kommt, welches nun aufgrund der unterschiedlichen Gradienten einem Außen- oder Innenfehler zugeordnet werden kann. Dadurch werden die Nachteile des bekannten Auswerteverfahrens mittels Differenzbildung von Signalen der in einer Ebene liegenden Sensoren ebenfalls vorteilhaft vermieden.

Voraussetzung für die Anwendung dieses Verfahrens, nämlich beide Signalanteile der Messungen aus den verschiedenen Höhenabständen zur Rohraußenoberfläche miteinander in Beziehung zu setzen, ist die Verwendung von sehr empfindlichen Magnetfeldsensoren, die auch noch in nennenswerten Abständen von der Rohraußenoberfläche (beispielsweise 5 mm) eindeutig zuordenbare Streuflusssignale mit auswertbarem Signal/Rauschverhältnis liefern.

Da Hall-Sonden oder Induktionsspulen Streuflüsse aufgrund des Rauscheinflusses nur in einem sehr oberflächennahen Abstand bis ca. 2 mm erfassen können, sind diese Detektoren für das erfindungsgemäße Verfahren nicht optimal bzw. zur Messung in größeren Abständen von der Prüfoberfläche überhaupt nicht geeignet.

Erfindungsgemäß werden deshalb für das vorgeschlagene Prüfverfahren vorteilhaft so genannte GMR- (giant magnetoresistance-) Sensoren verwendet, die im niederfrequenten Spektrum eine hohe Feldempfindlichkeit und eine hohe Unempfindlichkeit gegen elektrische Störgrößen besitzen und deshalb auch im Vergleich zu den bekannten Hall-Sonden oder Induktionsspulen in einem weiter entfernten Abstand zur Prüfoberfläche eingesetzt werden können.

Alternativ können jedoch für die oberflächennah positionierten Sensoren auch die bekannten Hall-Sonden oder Induktionsspulen und für die weiter von der Rohraußenoberfläche angeordneten Sonden GMR-Sensoren verwendet werden.

In einer vorteilhaften Ausgestaltung des erfindungsgemäßen Verfahrens wird zur weiteren Verbesserung der Fehlererkennung und -zuordnung zusätzlich die Vertikalfeldkomponente des Streuflusses ebenfalls erfasst und zur Amplitude der Horizontalfeldkomponente oder -komponenten des Streuflusses ins Verhältnis gesetzt.

Untersuchungen haben gezeigt, dass sich die Horizontalfeldsignale (Amplitude, Gradient) eines Außenfehlers deutlich von dessen Vertikalfeldsignal (Amplitude, Gradient) unterscheidet. Bei einem Innenfehler stellt sich demgegenüber für das Horizontal- bzw. Vertikalfeldsignal eine vergleichbare Größenordnung ein.

Erfindungsgemäß lässt sich nun durch eine kombinierte Erfassung und Auswertung der gemessenen Vertikal- und Horizontalfeldamplituden eine weiter verbesserte Fehlertrennung realisieren. Dazu werden die ermittelten Amplituden für das Horizontal- und Vertikalfeld jeweils getrennt für Außen- und Innenfehler ins Verhältnis gesetzt.

Bei Versuchen wurden beispielsweise Signalverhältnisse von ca. 10 für einen Außenfehler und von ca. 1 für einen Innenfehler ermittelt. Das bedeutet, dass die Signale eines Außenfehlers ca. 10 mal stärker angezeigt werden, als die eines Innenfehlers, so dass mit dieser Methode, eine sehr exakte Fehlertrennung von Rohraußen- oder -innenfehlern ermöglicht wird.

Nachfolgend wird die Erfindung anhand der Figuren näher erläutert. Gleiche Bezugszeichen in unterschiedlichen Figuren bezeichnen gleiche Bauteile. Es zeigen:
- **Figur 1a**: schematisch dargestellte erfindungsgemäße Prüfanordnung,
- **Figur 1b**: Signalverlauf von Horizontalfeldamplituden in verschiedenen Abständen der Prüfoberfläche (schematisch),
- **Figur 2a**: Signallokalisierung durch Differenzbildung,
- **Figur 2b**: Fehlerzuordnung aufgrund unterschiedlicher Amplitudengradienten,
- **Figur 3a**: Fehlersignal Außenfehler
- **Figur 3b**: Fehlersignal Innenfehler.

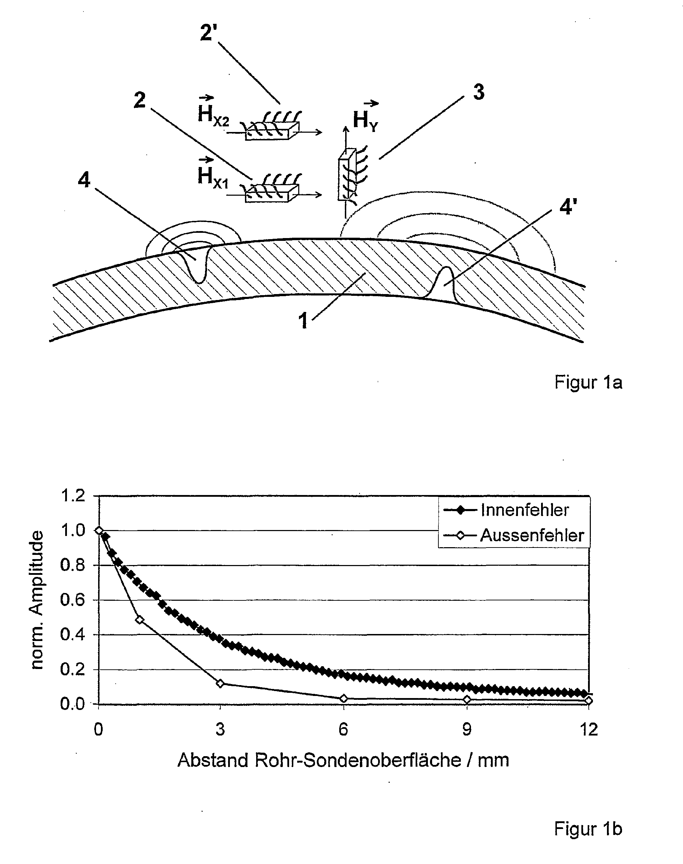

**Figur 1a** zeigt in einer schematischen Darstellung die erfindungsgemäße Prüfanordnung zur zerstörungsfreien Prüfung von Rohren aus ferromagnetischem Stahl mittels Streufluss.
Dargestellt ist ein zu prüfendes Rohr 1, welches einen an der Rohraußenoberfläche liegenden Fehler 4 und einen an der Rohrinnenoberfläche liegenden Fehler 4' aufweist. Die Prüfanordnung besteht aus zwei Abtastsonden 2 und 2' zur Erfassung der in vertikaler Richtung sich verändernden Amplitude der Horizontalfeldkomponente des magnetischen Streuflusses Hₓ. Das Magnetisierungsjoch zum berührungslosen Erzeugen des magnetischen Flusses ist hier nicht dargestellt.

Die erste Abtastsonde 2, befindet sich in einem nahen Abstand von ca. 1 mm von der Oberfläche des Rohres 1, welche in einer nicht näher dargestellten Prüfeinrichtung angeordnet ist. Oberhalb der Abtastsonde 2 ist in einem Abstand von ca. 3 mm von der ersten Sonde eine zweite Abtastsonde 2' in der Prüfeinrichtung angeordnet.
Zur Erfassung der Vertikalfeldkomponente des magnetischen Streuflusses H_{y} ist eine weitere Abtastsonde 3 senkrecht zu den Abtastsonden 2,2' angeordnet. Vorteilhaft sind alle Abtastsonden als so genannte GMR- Sensoren ausgebildet.

**Figur 1b** zeigt einen schematischen Verlauf der Messsignale der in den verschiedenen Abständen von der Prüfoberfläche gemessenen Horizontalfeldamplituden. Ersichtlich ist, dass die Amplitudensignale eines Innenfehlers mit zunehmendem Abstand von der Prüfoberfläche deutlich schwächer abfallen, als diejenigen eines Außenfehlers. Beispielsweise ermittelt sich der Gradient für einen Innenfehler zu einem Wert von ca. 0,3 und für einen Außenfehler von ca. 0,15. Die ermittelten Werte für die Amplitudenverhältnisse sind damit für einen Außenfehler ungefähr doppelt so groß wie für einen Innenfehler, so dass eine eindeutige Fehlerzuordnung möglich wird.

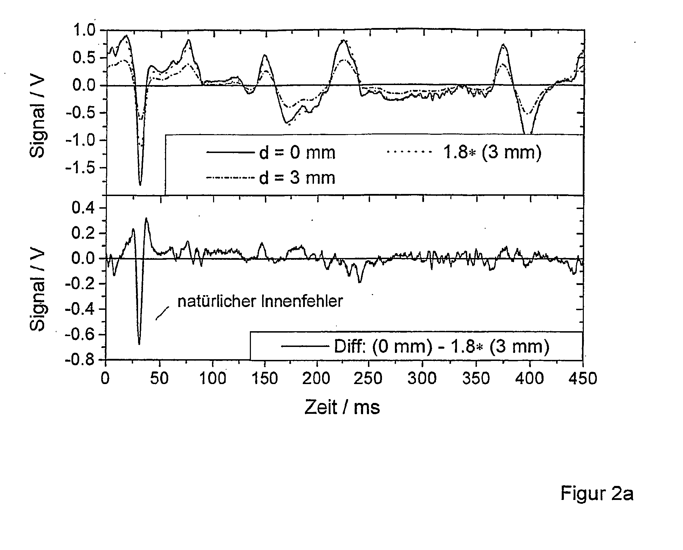

In **Figur 2a** ist im oberen Teil der Grafik der Verlauf des Amplitudensignals für eine Messung dargestellt, wobei durch Verstärkung und Differenzbildung der Signale die Fehlerzuordnung erfolgt. Hierbei wird zur Unterdrückung des "Untergrundrauschens" zunächst das in größerem Abstand von der Rohraußenoberfläche gemessene Signal beispielsweise mit einem Faktor 1,8 verstärkt und anschließend von dem Signal des in geringerem Abstand gemessenen abgezogen.

Im unteren Teil der **Figur 2a** ist das Differenzsignal dargestellt, wobei am linken Rand dieser Darstellung ein Fehlersignal eindeutig verifiziert werden kann.

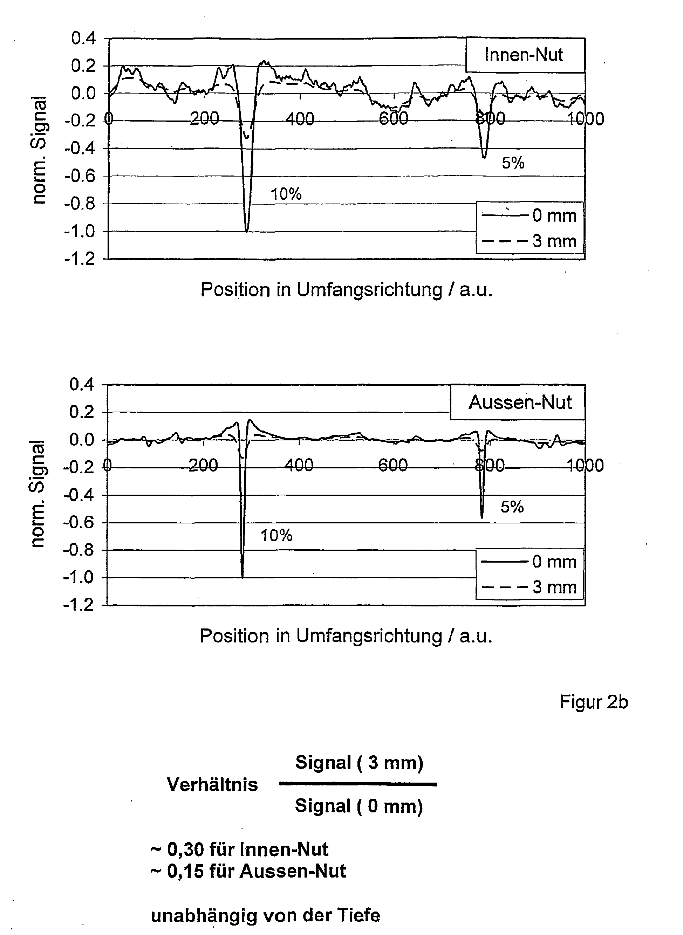

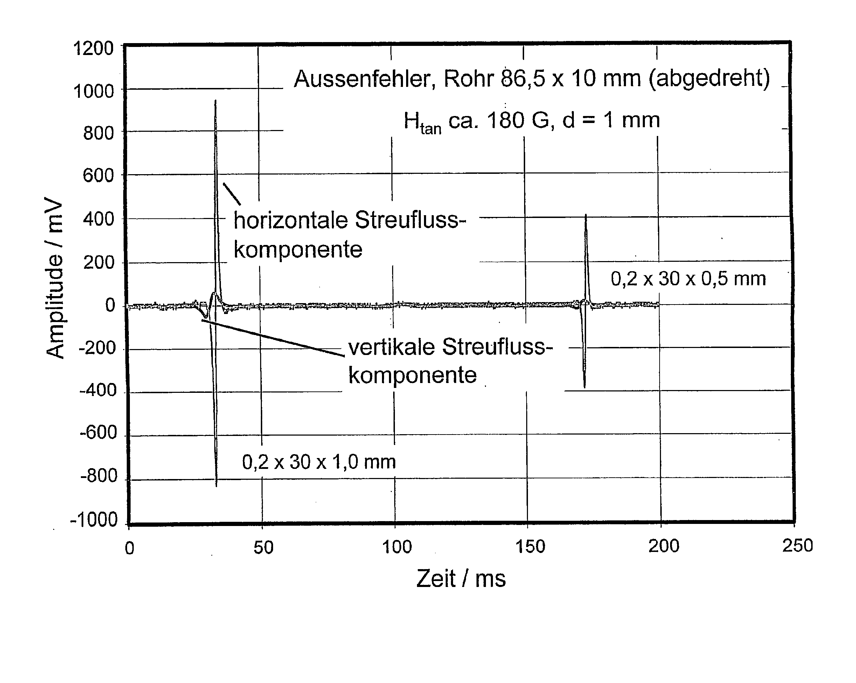

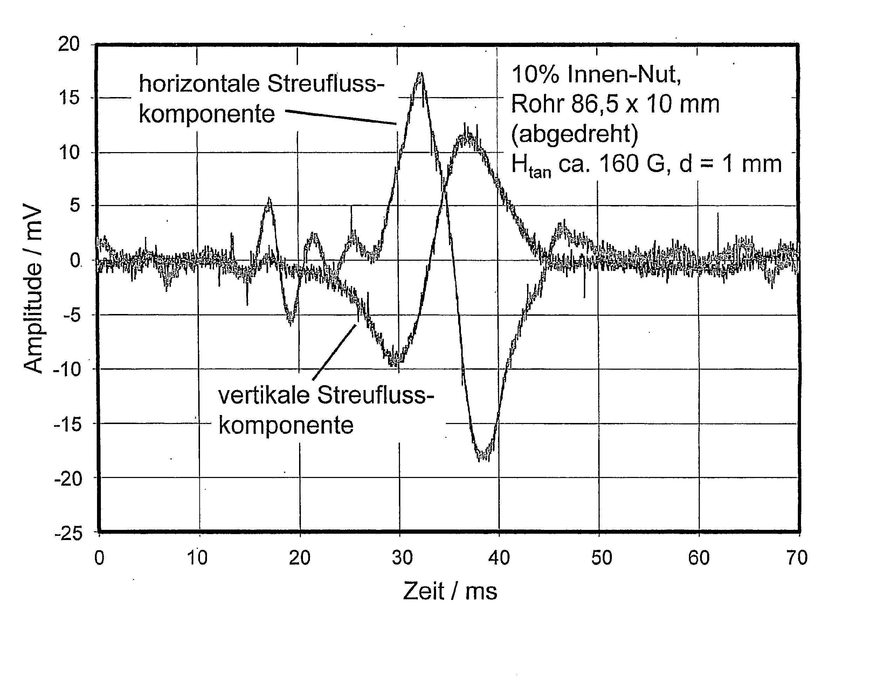

**Figur 2b** zeigt typische Fehlersignale von derart geglätteten Signalverläufen für künstlich erzeugte Fehler (Nuten) an der Rohraußen- oder -innenoberfläche. Im Fall eines an der Rohrinnenoberfläche liegenden Fehlers beträgt das Amplitudenverhältnis für die verschiedenen Messabstände ca. 0,3 und für Außenfehler ca. 0,15, so dass die Fehler nunmehr eindeutig der Rohraußen- oder Innenoberfläche zugeordnet werden können.

Zur weiteren Optimierung der Signalauswertung und damit der Fehlertrennung kann, wie in **Figur 3** dargestellt, zusätzlich das Messsignal der Vertikalfeldkomponente ausgewertet werden.

**Figur 3a** zeigt die typischen Fehlersignale für einen 1 mm bzw. 0,5 mm tiefen Außenfehler und **Figur 3b** für einen 1 mm tiefen Innenfehler. Aufgetragen ist hierin jeweils das Signal für die Horizontalfeldkomponente und Vertikalfeldkomponente.

zeigt im linken Bereich der Grafik das Fehlersignal eines 1 mm tiefen Fehlers. Die Horizontalfeldamplitude des Streuflusses ist um das ca. 10-fache größer als die entsprechende Vertikalamplitude, so dass dieser Fehler als Außenfehler identifiziert werden kann. Gleiche Verhältnisse lassen sich auch für andere Fehlertiefen ermitteln. Im rechten Bereich der Grafik ist das Fehlersignal eines 0,5 mm tiefen Fehlers dargestellt. Auch hier ist die Horizontalfeldamplitude des Streuflusses um das ca. 10-fache größer als die Vertikalfeldamplitude.

zeigt den typischen Signalverlauf eines künstlich erzeugten Innenfehlers (Nut). Setzt man die in der horizontalen Richtung liegende Amplitude der magnetischen Streuflüsse zur vertikal liegenden Amplitude ins Verhältnis, so ergibt sich für den Innenfehler jeweils ein Verhältnis von ca. 1. Das bedeutet, dass man nun über die Verhältnisermittlung der gemessenen und erfindungsgemäß aufbereiteten Signale Außen- und Innenfehler eindeutig und mit großer Sicherheit identifizieren kann und damit eine Fehlerzuordnung zur Rohraußen- oder -innenfehler ermöglicht wird.

### Bezugszeichenliste

| **Nr.** | **Bezeichnung** |
|---|---|
| 1 | Rohr |
| 2, 2' | Abtastsonden für Vertikalfeld |
| 3 | Abtastsonde für Horizontalfeld |
| 4, 4' | Außen-/Innenfehler |
| H_{X} | Horizontalfeldkomponente des magnetischen Streuflusses |
| H_{y} | Vertikalfeldkomponente des magnetischen Streuflusses |

## Patentansprüche

1. Verfahren zur zerstörungsfreien Prüfung von Rohren (1) aus ferromagnetischem Stahl mittels Streufluss, bei dem das sich in Längsrichtung fortbewegende und wahlweise zusätzlich rotierende Rohr (1) durch ein Gleichfeld magnetisiert und der erzeugte magnetische Fluss berührungslos in das Rohr übertragen und die im oberflächennahen Bereich der Außen- oder Innenoberfläche des Rohres sich befindenden Ungänzen (4,4') magnetische Streuflüsse hervorrufen, die aus der Rohroberfläche austreten und durch Sensoren (2,2',3) detektiert werden
**dadurch gekennzeichnet,**
**dass** mindestens die Horizontalfeldkomponente (Hₓ) des in Horizontal- (Hₓ) und Vertlkalfeldkomponenten (H_{y}) aufteilbaren magnetischen Streuflusses erfasst wird, wobei deren in der vertikalen Richtung zur Rohroberfläche sich verändernde Amplitude zum Einen in einem oberflächennahen Abstand von der Rohraußenoberfläche und zum Anderen in einem weiter davon entfernt liegenden Abstand erfasst und die erfassten Signale in Beziehung zu einander gesetzt werden.

2. Verfahren nach Anspruch 1,
**dadurch gekennzeichnet,**
**dass** der oberflächennahe Abstand ca. 0,5 - 1,5 mm beträgt.

3. Verfahren nach Anspruch 1 und 2,
**dadurch gekennzeichnet,**
**dass** der weiter entfernt liegende Abstand ca. 2 - 5 mm beträgt.

4. Verfahren nach Anspruch 1,
**dadurch gekennzeichnet,**
**dass** die Amplitude des im weiter entfernt liegenden Abstand erfassten Signales um einen Faktor > 1 vergrößert und von der Amplitude des im oberflächennahen Bereich erfassten Signals abgezogen wird.

5. Verfahren nach den Ansprüchen 1-4,
**dadurch gekennzeichnet,**
**dass** die Amplitude der Vertikatfeklkomponente (H_{y}) des magnetischen Streuflusses zusätzlich erfasst und zur Amplitude der Horizontalfeldkomponente (Hₓ) ins Verhältnis gesetzt wird.

## Claims

1. A method for the non-destructive testing of pipes (1) of ferromagnetic steel by means of stray flux, in which the pipe (1) moving in the longitudinal direction and optionally additionally rotating is magnetised by a constant field and the generated magnetic flux is transmitted into the pipe in a contactless manner and the discontinuities (4, 4') located in the region close to the surface of the outer or inner surface of the pipe bring about magnetic stray fluxes, which issue from the pipe surface and are detected by sensors (2, 2', 3), **characterised in that** at least the horizontal field component (Hₓ) of the magnetic stray flux divisible into horizontal (Hₓ) and vertical (H_{y}) field components is detected, wherein its amplitude altering in the vertical direction with respect to the pipe surface is detected on the one hand at a distance close to the surface from the pipe outer surface and on the other hand at a distance more distant therefrom and the detected signals are placed in relation to one another.

2. A method according to claim 1, **characterised in that** the distance close to the surface is approximately 0.5 - 1.5 mm.

3. A method according to claim 1 and 2, **characterised in that** the more distant distance is approximately 2 - 5 mm.

4. A method according to claim 1, **characterised in that** the amplitude of the signal detected at the more distant distance is increased by a factor > 1 and is deducted from the amplitude of the signal detected in the region close to the surface.

5. A method according to claims 1-4, **characterised in that** the amplitude of the vertical field component (H_{y}) of the magnetic stray flux is additionally detected and is compared with the amplitude of the horizontal field component (Hₓ).

## Revendications

1. Procédé d'essai non destructif de tubes (1) en acier ferromagnétique au moyen d'un flux de dispersion, dans lequel le tube (1) se déplaçant dans la direction longitudinale et tournant en outre au choix est magnétisé par un champ électrique équidirectionnel et le flux magnétique généré est transmis sans contact dans le tube et les imperfections (4, 4') se trouvant dans la zone de la surface externe ou de la surface interne du tube proche de la surface font naître des flux de dispersion magnétiques qui partent de la surface du tube et sont détectés par des capteurs (2, 2', 3),
**caractérisé en ce que**
l'on enregistre au moins la composante de champ horizontale (Hₓ) du flux de dispersion magnétique répartissable en composante de champ horizontale (Hₓ) et composante de champ verticale (H_{y}) , dont l'amplitude variant dans la direction verticale par rapport à la surface du tube est enregistrée, d'une part, à une distance proche de la surface externe du tube et, d'autre part, à une distance plus éloignée de celle-ci et les signaux enregistrés sont fixés en rapport l'un avec l'autre.

2. Procédé selon la revendication 1,
**caractérisé en ce que**
la distance proche de la surface est d'environ 0, 5 à 1, 5 mm.

3. Procédé selon les revendications 1 et 2,
**caractérisé en ce que**
la distance plus éloignée est d'environ 2 à 5 mm.

4. Procédé selon la revendication 1,
**caractérisé en ce que**
l'amplitude du signal enregistré à la distance plus éloignée est augmentée d'un facteur > 1 et est déduite de l'amplitude du signal enregistré dans la zone proche de la surface.

5. Procédé selon les revendications 1 à 4,
**caractérisé en ce que**
l'amplitude de la composante de champ verticale (H_{y}) du flux de dispersion magnétique est également enregistrée et fixée en rapport avec l'amplitude de la composante de champ horizontale (Hₓ).
